# EUROPÄISCHE PATENTSCHRIFT

(11) **EP 1 133 047 B1**
(45) Veröffentlichungstag und Bekanntmachung des Hinweises auf die Patenterteilung: **26.12.2007**
(21) Anmeldenummer: 01105084.6
(22) Anmeldetag: 02.03.2001
(51) Int. Cl.: H02M 7/00, H02K 11/00

(54) **Frequenzumrichter**
Frequency converter
Convertisseur de fréquence

(30) Priorität: 06.03.2000 DE 10010919
(43) Veröffentlichungstag der Anmeldung: 12.09.2001
(73) Patentinhaber: GRUNDFOS A/S, DK-8850 Bjerringbro (DK)
(72) Erfinder: Bjerregard Jacobsen, John, 8850 Bjerringbro (DK)
(74) Vertreter: Vollmann, Heiko

(56) Entgegenhaltungen:
- US-A- 4 458 305
- US-A- 5 410 450
- US-A- 5 471 089
- US-A- 5 675 223
- US-A- 5 914 577

## Beschreibung

Die Erfindung betrifft einen Frequenzumrichter für einen Elektromotor mit den im Oberbegriff des Anspruchs 1 angegebenen Merkmalen.

Ein Frequenzumrichter dieser Art ist in US-A-5 914 577 beschrieben.

Frequenzumrichter dieser Art werden beispielsweise zum Antrieb von Elektromotoren von Pumpenaggregaten, Lüftern oder anderen Maschinen eingesetzt. Während früher ein Frequenzumrichtereinsatz ausschließlich für Motoren über 1 KW Leistung in Frage kam, wird mit zunehmender Miniaturisierung der Frequenzumrichter und Herstellung in Großserien der Einsatz auch im Bereich zwischen 50 und 1000 W Motorleistung wirtschaftlich praktikabel. Insbesondere bei Pumpenaggregaten ist der Einsatz von Frequenzumrichtern besonders vorteilhaft, da hiermit Pumpenaggregate geschaffen werden können, die aufgrund hoher Drehzahl trotz eines vergleichsweise kleinen Durchmessers große Förderströme realisieren.

Eine Tauchmotoreinheit für ein solches Pumpenaggregat ist beispielsweise aus DE 197 27 202 A1 bekannt. Bei einer solchen Anordnung sind sämtliche Bauteile des Frequenzumrichter innerhalb eines zylindrischen Gehäuses vergleichsweise geringen Durchmessers unterzubringen. Bei anderen Anwendungen hingegen, bei denen die axiale und radiale Baulänge des Motors nach Möglichkeit nicht vergrößert werden soll, ist man bemüht, die Bauteile des Frequenzumrichter flächig am Außenumfang des Motorgehäuses anzuordnen. Bei wieder anderen Anwendungen soll der Frequenzumrichter nach Möglichkeit im Klemmenkasten des Motors, also an dem quaderförmigen Gehäuse untergebracht werden. Darüber hinaus ist der Aufbau für die jeweilige Anwendung so zu modifizieren, dass die im Leistungsteil entstehende Verlustwärme zuverlässig abgeführt wird.

Da die Herstellungskosten eines solchen Frequenzumrichters ganz erheblich von den zu fertigenden Stückzahlen abhängen, ist es erstrebenswert, für unterschiedliche Anwendungen gleiche Baugruppen bzw. Bauteile einsetzen zu können. Es ist bekannt, den Frequenzumrichter in Baugruppen aufzuteilen und diese einzelnen Baugruppen beispielsweise platinenweise zuzuordnen. Funktionell besteht ein Frequenzumrichter aus einem Eingangskreis, einem Zwischenkreis und einem Leistungskreis - auch Wechselrichter genannt - sowie einem Steuer- und Regelkreis. Bekannt ist es, den Leistungskreis des Frequenzumrichters in einen Halbleiterbaustein bzw. in ein Halbleiterelement zu integrieren, den Eingangs- sowie den Zwischenkreis auf einer gemeinsamen Platine aufzubauen sowie den Steuer- und Regelkreis auf einer weiteren Platine aufzubauen. Bei diesem Aufbau können besonders groß bauende Bauteile wie beispielsweise Kondensatoren und Spulen des Zwischenkreises von der Platine getrennt angeordnet sein.

Vor diesem Hintergrund liegt der Erfindung die Aufgabe zugrunde, einen gattungsgemäßen Frequenzumrichter so auszubilden, dass seine Anwendung noch vielseitiger und seine Herstellung noch günstiger wird.

Diese Aufgabe wird gemäß der Erfindung durch die in Anspruch 1 angegebenen Merkmale gelöst. Vorteilhafte Ausgestaltungen der Erfindung sind in den Unteransprüchen, der nachfolgenden Beschreibung sowie der Zeichnung angegeben.

Grundgedanke der vorliegenden Erfindung ist es, Leitungsverbindungen und Anschlüsse innerhalb des Frequenzumrichters nach Möglichkeit in ein Bauteil, nämlich in das des Leistungsteils - dieser umfasst im Wesentlichen den Leistungskreis und ggf. auch weitere Leistungselektronik wie beispielsweise die des Eingangskreises - zu integrieren. Hierzu das Leistungsteil auszuwählen ist besonders zweckmäßig, da das Leistungsteil Leitungsverbindungen zum Eingangskreis bzw. dem Netz, zum Zwischenkreis, zum Steuer- und Regelkreis und zum Motor benötigt. Diese elektrischen Verbindungen können somit sämtlichst in einem Bauteil integriert werden, wobei die Leitungen aus Blechabschnitten, also aus Stanzteilen oder in sonstiger Weise (z. B. durch Laserschneiden) gewonnenen Blechabschnitten gebildet werden, die einerseits günstig herzustellen sind und andererseits eine hohe Eigenstabilität und einen ausreichend großen Leitungsquerschnitt bieten. Diese Leitungen führen direkt zu den Platinen der Anschlussbausteine, wo sie kontaktiert sind, sei es durch Löten oder Schweißen oder auch durch eine Steckverbindung. Diese durch eine Vergussmasse zusammen mit dem Halbleiterbaustein fixierten Bauteile sind kostengünstig zu fertigen, und zwar in unterschiedlicher Anordnung der Anschlüsse, ohne etwas am grundsätzlichen Konstruktionsaufbau zu ändern. Gleichzeitig können diese zusätzlichen Konstruktionselemente zur Befestigung des Halbleiterbausteins herangezogen werden. Der Halbleiterbaustein bedarf nämlich in der Regel einer intensiven Kühlung, was üblicherweise durch wärmeleitendes Anlegen desselben an einen Wärmeverteiler erfolgt. Über den Vergusskörper, der entweder den Halbleiterbaustein an mindestens drei Seiten umgibt oder auch einschließt, sei es teilweise oder vollständig, kann eine Befestigung, sei es über Klemmbügel oder Schraubverschlüsse, Nieten oder dergleichen, erfolgen, ohne den Halbleiterbaustein mechanisch zu überlasten.

Der den Leistungsteil beinhaltende Halbleiterbaustein ist üblicherweise quaderförmig und flach, wobei die Leitungsverbindungen an den schmalen Stirnseiten herausgeführt sind. Bei einem solchen Aufbau ist es besonders vorteilhaft, wenn die zum Zwischenkreisbauteil weisenden Leitungen zu einer Seite des Vergusskörpers bzw. des Halbleiterbausteins, die zum Steuer- und Regelbauteil weisenden Leitungen zur gegenüberliegend abgewandten Seite des Vergusskörpers und die zum Motor weisenden Leitungen zu einer dazu um 90° versetzten Seite herausgeführt sind. Abgesehen davon, dass diese Anordnung eine kreuzungsfreie Leitungsführung, also eine Leitungsführung in einer Ebene ermöglicht, hat diese Anordnung den Vorteil, dass das Zwischenkreisbauteil sowie das Steuer- und Regelbauteil je nach Anwendung in unterschiedlichem Winkel zum Leistungsteilbauteil angeordnet werden kann. Es kann also beispielsweise eine Anordnung gewählt werden, bei der diese drei Bauteile der Krümmung am Außenumfang eines Motors angepasst sind. Es kann durch Abwinklung um jeweils 90° bezogen auf das Leistungsteilbauteil auch eine Anordnung erzielt werden, die im Wesentlichen quaderförmig sein wird oder in einen zylindrischen Körper einschiebbar ist. Bei gerader Anordnung hingegen wird sich ein flach bauender Frequenzumrichter ergeben. Da die vom Leistungsteil abgehenden elektrischen Verbindungen durch Blechabschnitte gebildet sind, die zweckmäßigerweise so liegen, dass ihre Flachseiten in der Ebene des Halbleiterbausteins oder parallel dazu liegen, können diese längs der Seiten des Leistungsteilbauteils praktisch beliebig abgebogen werden. Sofern sie in diesem Bereich vom Vergusskörper umschlossen sind, ist lediglich die Gießform entsprechend zu ändern oder aber die Abwinklung vorzunehmen, bevor der Vergusskörper vollständig erstarrt ist.

Die Erfindung ist nachfolgend anhand eines in der Zeichnung dargestellten Ausführungsbeispiels näher erläutert. Es zeigen
- Fig. 1: in vereinfachter perspektivischer Darstellung die Ausbildung und Anordnung der Blecheinschnitte vor dem Herstellen des Vergusskörpers,
- Fig. 2: in gleicher Darstellung die Anordnung nach dem Herstellen des Vergusskörpers, wobei der Halbleiterbaustein zu Übersichtszwecken außerhalb des Vergusskörpers dargestellt ist und
- Fig. 3: in schematischer Darstellung drei mögliche Anordnungen der Bauteile eines Frequenzumrichters.

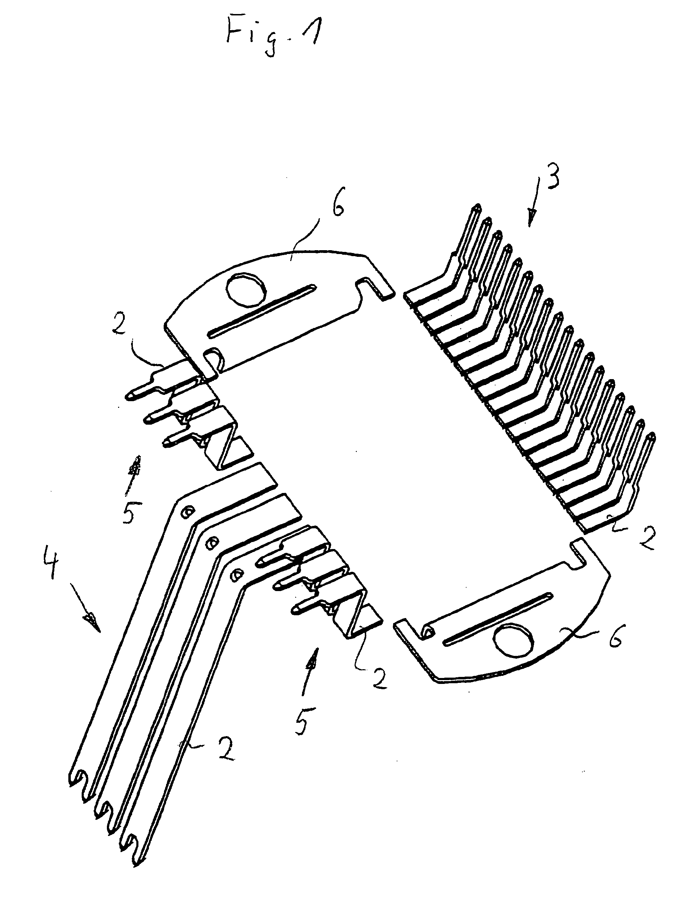

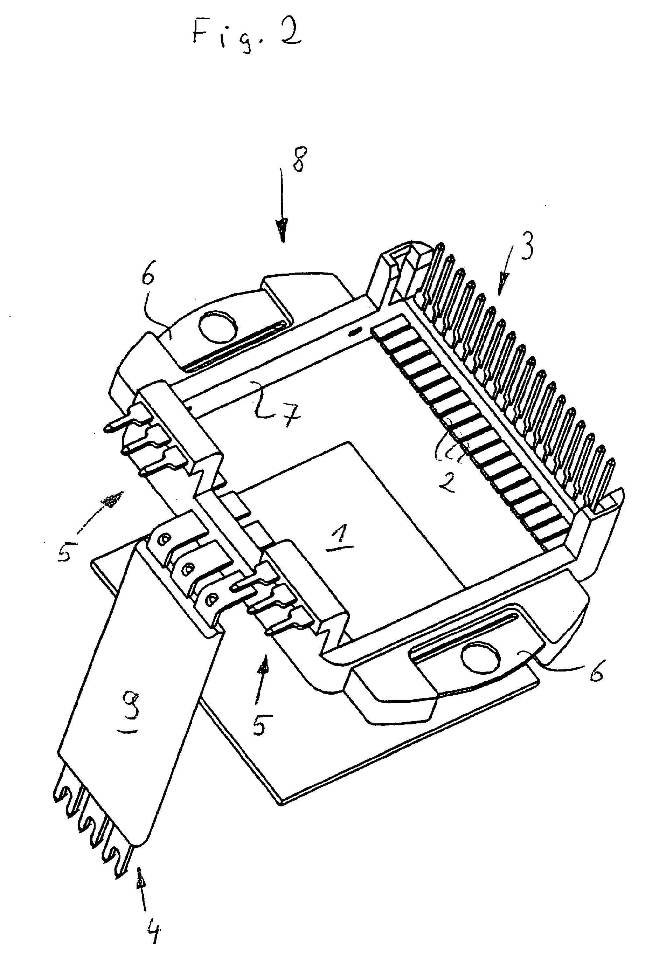

Das in Fig. 2 schematisch dargestellte Halbleiterbauelement 1 weist die bei solchen integrierten Bauteilen übliche quaderförmige und flache Bauform auf, bei der seitlich elektrische Anschlüsse in Form von dünnen Drähten (nicht dargestellt) herausgeführt sind. Diese Leitungen werden durch Bonden, beispielsweise durch Ultraschall-Schweißen, mit Blechabschnitten 2 verbunden, die durch Stanzen und Kaltverformen die in Fig. 1 dargestellte Bauform und Anordnung erhalten haben.

Wie sich aus den Fig. 1 und 2 ergibt, sind die Blechabschnitte 2, die gleichzeitig elektrische Leiter bilden, in drei Gruppen angeordnet. Es gibt eine erste Gruppe 3 von insgesamt achtzehn Blechabschnitten 2, die um etwa 90° abgewinkelt sind und sich zu einer Seite des Halbleiterbauelements 1 erstrecken. Gegenüberliegend ist eine weitere Gruppe 4 von Blechabschnitten gebildet, die aus drei Blechabschnitten besteht, die ebenfalls um etwa 90° aus der Ebene des Halbleiterbauelements 1 heraus abgebogen sind, jedoch in umgekehrter Richtung zu denen der Gruppe 3. Diese Blechabschnitte weisen darüber hinaus eine größere Länge als die vorerwähnten auf. Die Gruppe 5 schließlich, welche die Gruppe 4 von Blechabschnitten 2 einschließt, besteht aus einem Paar von drei Blechabschnitten, die jeweils zweimal um 90°, jedoch in entgegengesetzter Richtung abgebogen sind, so dass die freien Enden der Blechabschnitte der Gruppe 5 sich in einer parallel zum Halbleiterbauelement 1 befindlichen Ebene erstrecken. Schließlich sind zwei Blechabschnitte 6 vorgesehen, die sich zu den beiden anderen Längsseiten des Halbleiterbauelements 1 erstrecken und die rein mechanische Funktion haben.

Die Gruppen 3, 4, 5 von Blechabschnitten 2 sowie die beiden Blechabschnitte 6 sind in einem gemeinsamen Vergusskörper 7 positioniert und mechanisch miteinander verbunden. Der Vergusskörper 7 umschließt in der dargestellten Ausführung das Halbleiterbauelement 1 an allen vier Seiten, so dass es durch den Vergusskörper 7 rahmenartig eingegliedert und geschützt ist. Die Blechabschnitte 6 dienen zur Befestigung des gesamten so gebildeten Leistungsteilbauteils 8. Der aus Kunststoff bestehende Vergusskörper 7 ist elektrisch nicht leitend.

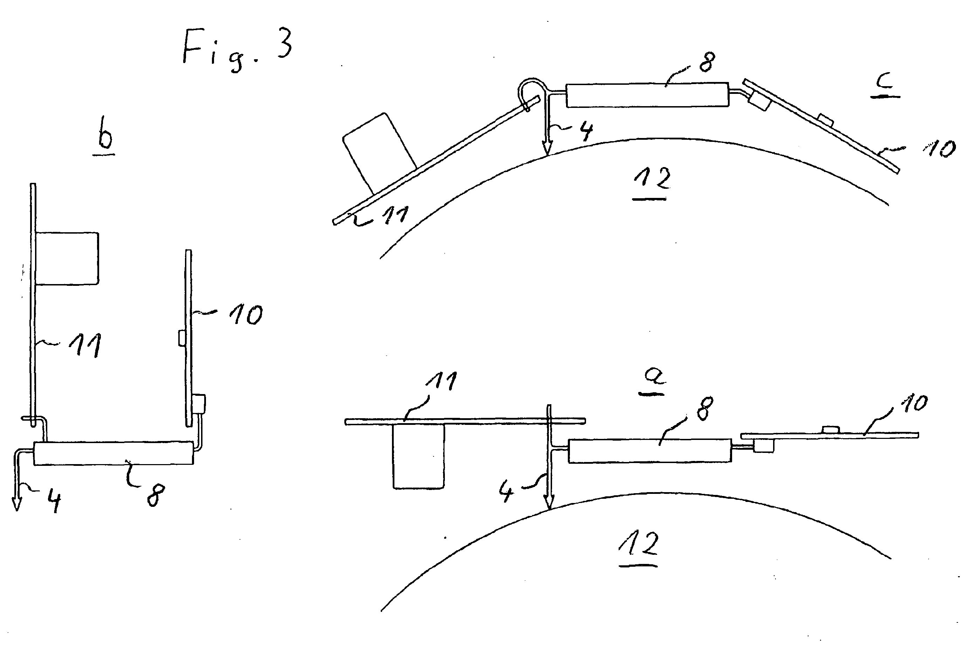

Bei der vorliegenden Ausführungsform ist darüber hinaus ein weiterer Vergusskörper 9 vorgesehen, der einen Teil der Blechabschnitte der Gruppe 4 umschließt. Dieser Vergusskörper 9 hält die darin eingebetteten Blechabschnitte in ihrer Lage zueinander und isoliert sie gleichzeitig in diesem Bereich nach außen. Die Gruppe 4 stellt die Verbindungsleitung zum Motor dar, der durch den Frequenzumrichter angesteuert werden soll. Wie sich aus Fig. 2 ergibt, sind die freien Enden der Blechabschnitte 2 der Gruppen 3 und 5 schlank zulaufend ausgebildet, so dass sie den steckerseitigen Teil einer Steckverbindung bilden, deren muffenseitiger Teil an Platinen angeordnet ist, und zwar an einer in Fig. 3 schematisch dargestellten, das Steuer- und Regelbauteil bildenden Platine 10 sowie an einer den Zwischenkreis aufnehmenden Platine 11, die auch Teile des Eingangskreises umfassen kann. Dieses Zwischenkreisbauteil wird über die Gruppe 5 der Blechabschnitte 2 angeschlossen und weist ebenfalls entsprechende Aufnahmen für die durch die Blechabschnitte 2 der Gruppe 5 gebildeten Stecker auf.

Die mechanische Befestigung des gesamten so gebildeten Leistungsteilbauteils erfolgt über die seitlichen Blechabschnitte 6 zweckmäßigerweise so, dass das Halbleiterbauelement 1 unmittelbar an einem Wärmeverteiler anliegt, um die dort entstehende Abwärme abzuführen.

Das Halbleiterbauelement 1, das hier nicht im Detail beschrieben wird, umfasst mindestens die Leistungselektronik des Leistungsteils, im vorliegenden Ausführungsbeispiel jedoch auch den Gleichrichter des Eingangskreises. Die Abwinklung der freien Enden der Blechabschnitte kann, wie die fertig vergossene Form nach Fig. 2 verdeutlicht, auch nach dem Vergießen durch Kaltverformung variiert werden. Es kann jedoch auch vorgesehen sein, die Blechabschnitte je nach Anordnung der weiteren Baugruppen vor dem Vergießen entsprechend zu verformen. Jedenfalls geben sich bei einer solchen Ausbildung des Leistungsteils zahlreiche Möglichkeiten, die Baugruppen zueinander anzuordnen. In Fig. 3 sind hiervon drei Möglichkeiten beispielhaft dargestellt. Bei der Ausführung nach Fig. 3a liegt das Leistungsteilbauteil im Wesentlichen in der gleichen Ebene wie das Zwischenkreisbauteil 11 sowie das Steuer- und Regelbauteil 10, die zu beiden Seiten des Leistungsbauteils 8 angeordnet sind. Die Leitungsverbindung zum Motor erfolgt senkrecht dazu. Bei der Ausführung gemäß Fig. 3b sind die Platinen des Steuer- und Regelbauteils 10 sowie des Zwischenkreisbauteils 11 senkrecht zum Leistungsteilbauteil 8, d. h. zu der Ebene, in der das Halbleiterbauelement 1 liegt, angeordnet. Auf diese Weise kann der Frequenzumrichter in einem quaderförmigen Gehäuse angeordnet werden.

Die Anordnung nach Fig. 3c zeigt, wie die vorgenannten drei Bauteile 8, 10 und 11 dem Außenumfang des Motorgehäuses 12 folgend angeordnet werden können. Auch bei dieser Ausführung erfolgt die Leitungsverbindung über die Gruppe 4 von Blechabschnitten 2 senkrecht nach unten zum Motor.

Wie diesen nicht abschließend und nur beispielhaft zu verstehenden Anordnungen zu entnehmen ist, ermöglicht das Leistungsteilbauteil 8 mit seinen in einem rahmenförmigen Vergusskörper 7 eingegliederten Blechabschnitten 2 eine kostengünstige Lösung der elektrischen und mechanischen Verbindung der einzelnen Baugruppen zueinander.

### Bezugszeichenliste

- 1 -: Halbleiterbauelement
- 2 -: Blechabschnitte
- 3 -: Gruppe von Blechabschnitten zum Steuer- und Regelbauteil
- 4 -: Gruppe von Blechabschnitten zum Motoranschluss
- 5 -: Gruppe von Blechabschnitten zum Zwischenkreisbauteil
- 6 -: Blechabschnitte zur Befestigung
- 7 -: Vergusskörper
- 8 -: Leistungsteilbauteil
- 9 -: Vergusskörper der Gruppe 4
- 10 -: Steuer- und Regelbauteil
- 11 -: Zwischenkreisbauteil
- 12 -: Motor

## Patentansprüche

1. Frequenzumrichter für einen Elektromotor im Wesentlichen bestehend aus einem in einem gemeinsamen Halbleiterbaustein (1) integrierten Leistungsteil, einem mindestens die Zwischenkreiselektronik aufnehmenden Bauteil (11) (Zwischenkreisbauteil) und einem die Steuer- und Regelelektronik aufnehmenden Bauteil (10) (Steuer- und Regelbauteil), **dadurch gekennzeichnet, dass** die elektrischen Verbindungen vom Halbleiterbaustein (1) des Leistungsteils zum Zwischenkreisbauteil (11) und vom Halbleiterbaustein (1) des Leistungsteils zum Steuer- und Regelbauteil (10) durch Blechabschnitte (2) gebildet sind, die durch einen gemeinsamen Vergusskörper (7) positioniert und mechanisch miteinander verbunden sind, wobei das Zwischenkreisbauteil (11) und das Steuer- und Regelbauteil (10) jeweils eine Platine aufweisen und die durch die Blechabschnitte (2) gebildeten Leitungen des Leistungsteils an diese Platinen anschließen.

2. Frequenzumrichter nach Anspruch 1, **dadurch gekennzeichnet, dass** die vom Halbleiterbaustein (1) des Leistungsteils zum Motor führenden Leitungen ebenfalls durch im Vergusskörper (7) gehaltene Blechabschnitte (2) gebildet sind, die am Motor anschließen.

3. Frequenzumrichter nach einem der vorhergehenden Ansprüche, **dadurch gekennzeichnet, dass** der Vergusskörper (7) den Halbleiterbaustein (1) an mindestens drei Seiten umschließt.

4. Frequenzumrichter nach einem der vorhergehenden Ansprüche, **dadurch gekennzeichnet, dass** der Vergusskörper (7) eine Halterung für den Frequenzumrichter bildet.

5. Frequenzumrichter nach einem der vorhergehenden Ansprüche, **dadurch gekennzeichnet, dass** freie Enden von Blechabschnitten (2) Teile von Steckverbindungen zu mindestens einem Anschlussbaustein (10, 11) bilden.

6. Frequenzumrichter nach einem der vorhergehenden Ansprüche, **dadurch gekennzeichnet, dass** die Blechabschnitte (2) durch Stanzen oder Laserschneiden gebildet sind.

7. Frequenzumrichter nach einem der vorhergehenden Ansprüche, **dadurch gekennzeichnet, dass** die zum Zwischenkreisbauteil (11) weisenden Leitungen (5) zu einer Seite des Vergusskörpers (7), die zum Steuer- und Regelbauteil (10) weisenden Leitungen (3) zur gegenüberliegend abgewandten Seite des Vergusskörpers (7) und die zum Motor weisenden Leitungen (4) zu einer dazu jeweils um 90° versetzten Seite herausgeführt sind.

8. Frequenzumrichter nach einem der vorhergehenden Ansprüche, **dadurch gekennzeichnet, dass** die Leitungsanschlüsse des Halbleiterbausteins (1) durch Schweißen mit den Blechabschnitten (2) leitungsverbunden sind.

## Claims

1. A frequency converter for an electric motor essentially consisting of a power part integrated into a common semiconductor unit (1), of a component (11) (intermediate circuit component) receiving at least the intermediate circuit electronics, and of a component (10) (control and regulation component) receiving the control and regulation electronics, **characterised in that** the electrical connections from the semiconductor unit (1) of the power part to the intermediate circuit component (11), and from the semiconductor unit (1) of the power part to the control and regulation component (10) are formed by sheet-metal sections (2), which are positioned and mechanically connected to one another by a common cast body (7), wherein the intermediate circuit component (11) and the control and regulation component (10) in each case comprise a circuit board, and the leads of the power part which are formed by these sheet-metal sections (2) connect to these circuit boards.

2. A frequency converter according to claim 1, **characterised in that** the leads leading from the semiconductor unit (1) of the power part to the motor are likewise formed by sheet-metal sections (2) which are held in the cast body (7) and connect to the motor.

3. A frequency converter according to one of the preceding claims, **characterised in that** the cast body (7) encloses the semiconductor unit (1) on at least three sides.

4. A frequency converter according to one of the preceding claims, **characterised in that** the cast body (7) forms a holder for the frequency converter.

5. A frequency converter according to one of the preceding claims, **characterised in that** free ends of sheet-metal sections (2) form parts of plug connections to at least one connection unit (10, 11).

6. A frequency converter according to one of the preceding claims, **characterised in that** the sheet-metal sections (2) are formed by punching or laser cutting.

7. A frequency converter according to one of the preceding claims, **characterised in that** the leads (5) directed to the intermediate circuit component (11) are led out to one side of the cast body (7), the leads (3) directed to the control and regulation component (10) are led out to the oppositely lying, distant side of the cast body (7), and the leads (4) directed to the motor are led out to a side in each case offset thereto by 90°.

8. A frequency converter according to one of the preceding claims, **characterised in that** the lead connections of the semiconductor unit (1) are conductively connected by welding to the sheet-metal sections (2).

## Revendications

1. Convertisseur de fréquence pour un moteur électrique, constitué essentiellement d'une partie de puissance intégrée dans une puce de semiconducteur (1) commune, d'un composant (11) recevant au moins l'électronique du circuit intermédiaire (composant de circuit intermédiaire) et d'un composant (10) recevant l'électronique de commande et de régulation (composant de commande et de régulation), **caractérisé en ce que** les connexions électriques de la puce de semiconducteur (1) de la partie de puissance au composant de circuit intermédiaire (11) et de la puce de semiconducteur (1) de la partie de puissance au composant de commande et de régulation (10), sont formées par des segments de tôle (2), qui sont positionnés et reliés mécaniquement entre eux par un corps moulé (7) commun, le composant de circuit intermédiaire (11) et le composant de commande et de régulation (10) présentant chacun une platine et les conducteurs de la partie de puissance, formés par les segments de tôle (2), se raccordant alors à ces platines.

2. Convertisseur de fréquence selon la revendication 1, **caractérisé en ce que** les conducteurs menant de la puce de semiconducteur (1) de la partie de puissance au moteur, sont également formés par des segments de tôle (2) maintenus dans le corps moulé (7), qui se raccordent au moteur.

3. Convertisseur de fréquence selon l'une des revendications précédentes, **caractérisé en ce que** le corps moulé (7) entoure la puce de semiconducteur (1) sur au moins trois côtés.

4. Convertisseur de fréquence selon l'une des revendications précédentes, **caractérisé en ce que** le corps moulé (7) constitue un support de montage pour le convertisseur de fréquence.

5. Convertisseur de fréquence selon l'une des revendications précédentes, **caractérisé en ce que** des extrémités libres de segments de tôle (2) font partie de connexions à enfichage à au moins un composant (10, 11) à raccorder.

6. Convertisseur de fréquence selon l'une des revendications précédentes, **caractérisé en ce que** les segments de tôle (2) sont formés par poinçonnage ou découpage au laser.

7. Convertisseur de fréquence selon l'une des revendications précédentes, **caractérisé en ce que** les conducteurs (5) pointant en direction du composant de circuit intermédiaire (11) sont sortis vers un côté du corps moulé (7), les conducteurs (3) pointant en direction du composant de commande et de régulation (10) sont sortis vers le côté, tourné à l'opposé, du corps moulé (7) et les conducteurs (4) pointant en direction du moteur sont sortis vers un côté décalé de 90° par rapport à chacun des précédents.

8. Convertisseur de fréquence selon l'une des revendications précédentes, **caractérisé en ce que** les bornes des conducteurs de la puce de semiconducteur (1) sont reliées fonctionnellement par soudage aux segments de tôle (2).
